Europäisches Patentamt

(19) European Patent Office

Office européen des brevets

(11) Publication number: **0 021 579**
**B1**

(12) **EUROPEAN PATENT SPECIFICATION**

(45) Date of publication of patent specification: **11.05.83**

(51) Int. Cl.³: **B 29 B 1/00, B 29 C 29/00, B 29 D 9/08**

(21) Application number: **80301551.0**

(22) Date of filing: **12.05.80**

(54) Method and apparatus for the manufacture of plastics articles.

(30) Priority: **11.05.79 GB 7916510**

(43) Date of publication of application:
**07.01.81 Bulletin 81/1**

(45) Publication of the grant of the patent:
**11.05.83 Bulletin 83/19**

(84) Designated Contracting States:
**AT BE CH DE FR GB IT LI LU NL SE**

(56) References cited:
**DD - A - 61 094**
**DE - A - 1 945 857**
**DE - B - 1 220 113**
**FR - A - 2 167 876**
**GB - A - 1 267 917**
**GB - A - 1 267 918**
**GB - A - 1 369 204**
**GB - A - 1 439 353**

(73) Proprietor: **PLASTIC RECYCLING LIMITED**
**59 Church Road**
**Great Bookham, Leatherhead Surrey KT23 3JJ**
**(GB)**

(72) Inventor: **Mair, William Jeffery**
**11, Rectory Close**
**Merrow, Nr. Guildford Surrey (GB)**

(74) Representative: **Whalley, Kevin et al,**
**Marks & Clerk 57/60 Lincoln's Inn Fields**
**London WC2A 3LS (GB)**

Courier Press, Leamington Spa, England.

Method and apparatus for the manufacture of plastics articles

This invention relates to a method and apparatus for the manufacture of plastics articles, in particular for the manufacture of board-like articles from scrap or salvaged plastics materials.

Our British Patent Nos. 1 267 917, 1 267 918, 1 369 204 and 1 439 353 essentially relate to the manufacture of plastics products, particularly board-like articles, from a raw material containing at least 50% by weight reclaimed synthetic thermoplastics material by providing a mat of the raw material in particulate or granulated form, heating the mat to the softening point of the material by conveying the mat of material through an oven, and compressing the softened mat to a required shape.

In a further development of the manufacturing process generally described in the above-mentioned prior specification GB—A—1.439.353, the mat is usually compressed between a pair of rollers arranged downstream of the oven, one of the rollers being arranged generally above the other, the mat passing from the oven above the top roller of the pair, between the pair of rollers and below the bottom roller to continue in the direction away from the oven.

This method has been found to produce reasonably good results in practice, but because of the tight curve to which the mat is subjected on passing around the pair of rollers there is the likelihood of cracking occurring in the cooled and compressed mat.

It is an object of the present invention to improve the known method, and in particular to overcome the problem of cracking of the mat.

In the French patent application FR—A—2.167.876 is described a method of continuously laminating together a board formed of vegetable fibres, woodchips or other particles of wood and a strip of plastics material by feeding continuously the board and the strip between a cylindrical member and an endless belt, heating and rotating the cylindrical member, guiding the endless belt over the surface of the cylindrical member and tensioning the belt to press the board and the strip together and against the cylindrical member to cause the board and the strip to be firmly bonded to one another without any bonding agent. In a preferred embodiment of the invention described in this prior specification, an endless belt, for example a steel belt, is guided over rollers one of which is a tension roller; the endless belt is also guided around a heated revolving drum, which together with the encircling belt can continuously produce composite boards comprising boards made of fibres, woodchips or other particles of wood laminated to plastics sheeting.

The present invention in one aspect provides a method of manufacturing a plastics product from a raw material containing at least 50% by weight reclaimed synthetic thermoplastics material by providing a mat of the raw material in particulate or granulated form on a conveyor belt, heating the mat of material by conveying the mat through an oven on the conveyor belt to cause the thermoplastics material in the mat to soften, and compressing the softened mat downstream of the oven for which compression two rollers are provided arranged one above the other, one of the rollers supporting the conveyor belt, whereby the softened thermoplastics material binds the pieces of other material in the mat, the mat being cooled during compression, wherein the mat is compressed between the conveyor belt and a further belt passing around three rollers arranged generally one above the other to define a first passage between the upper and middle rollers and a second passage between the middle and lower rollers, the middle roller also supporting the conveyor belt, the mat passing from the oven through the first passage, around the middle roller to the second passage, and then around the lower roller to continue in the direction away from the oven, the middle and lower rollers being of substantially greater diameter than the upper roller and being of sufficient diameter to mitigate cracking of the mat as it passes around the rollers, and wherein the mat is cooled at least as it passes around the middle roller.

The invention in another aspect provides apparatus for manufacturing a plastics product from raw material containing at least 50% by weight reclaimed synthetic thermoplastics material, comprising a conveyor belt, means for feeding a mat of the raw material in particulate or granulated form onto the conveyor belt at an upstream portion thereof, an oven downstream of the raw material feeding means for heating the mat to cause the thermoplastics material in the mat to soften as the mat is passed through the oven on the conveyor belt, and compression means downstream of the oven for compressing the softened mat, said compression means being composed of two rollers arranged one above the other, one of the rollers supporting the conveyor belt, means being provided for cooling the mat during compression, wherein a further belt is arranged to pass around an arrangement of three rollers downstream of the oven and to co-operate with the conveyor belt for compressing the softened mat, the three rollers being arranged generally one above the other to define a first passage between the upper and middle rollers and a second passage between the middle and lower rollers, the middle roller also supporting the conveyor belt, the middle and lower rollers being of substantially greater diameter than the upper roller and being of sufficient diameter to mitigate cracking of the mat as it passes around the rollers, and means being provided for cooling the mat of material at least as it passes around the middle roller.

The middle and lower rollers may be of the same diameter, or one of the middle and lower rollers may be of greater diameter than the other. In any case both the middle and lower rollers preferably have a diameter at least twice that of the upper roller. For example, if the diameter of the upper roller is 1 ft (30.5 cm) then the diameters of the middle and lower rollers may be suitably both 2 ft 6 ins (76 cm), or the middle roller may suitably have a diameter of 3 ft (91.5 cm) and the lower roller a diameter of 2 ft (61 cm), or the middle roller may suitably have a diameter of 2 ft (61 cm) and the lower roller a diameter of 3 ft (91.5 cm).

Such an arrangement wherein the middle and lower rollers have a greater diameter than the upper roller leads to reduced cracking of the mat and also increased throughput of the mat through the apparatus, and also allows more efficient cooling of the mat as it passes around the rollers.

If the middle and lower rollers have a diameter less than twice that of the upper roller then the mat is more inclined to crack as it passes around the rollers. If, on the other hand, the middle and lower rollers are made bigger then exemplified above in relation to the upper roller, then the apparatus will become too high.

The three rollers are preferably arranged vertically one above the other, but they may be offset; for example the middle roller could be offset from the upper and lower rollers in the direction away from the oven, the upper roller being vertically arranged above the lower roller.

The mat is subjected to cooling as it passes around the rollers, for example by internally cooling the rollers themselves and/or spraying a mist of coolant where the mat passes around and between the rollers. Preferably the coolant is only applied to the middle and lower rollers. A mist of coolant is preferably applied to the mat as it emerges from the second passage between the middle and lower rollers, if this method of cooling is employed.

The particulate or granulated material preferably passes through and emerges from the oven on a sheet of for example polyethylene and another sheet of polyethylene is applied to the other face of the mat of material while compressing the latter. The second sheet of polyethylene to be applied is fed into the first passage between the upper and middle rollers together with the mat of material which already has a similar sheet applied thereto. Following the compression between the rollers there is produced a mat of material sandwiched between two sheets of polyethylene. However, polyethylene need not be fed into the passage between the upper and middle rollers, i.e. the mat may have a sheet of polyethylene applied to one face only thereof.

The polyethylene applied to one or both faces of the mat may, in one particularly advantageous arrangement, be expanded polyethylene sheet about 2—10 mm thick suitably applied on a mat 6—12.5 mm ($\frac{1}{4}$—$\frac{1}{2}$ inch) thick. This provides a product having an absorbent non-slip surface which may be suitably used as a flooring, particularly in agricultural applications, for example in cowsheds.

The raw material used to provide the mat may suitably include particles of fibrous material in the form of any one or more of paper, paperboard, cardboard, sawdust, wood chips and straw; metal foil; faced paper, paperboard and cardboard; bitumastic paper, paperboard and cardboard; and plastics coated paper, paperboard and cardboard. The raw material may be salvaged material and comprise a random mixture of different thermoplastics materials or may be scrap from other manufacturing processes. Thus the raw material may suitably comprise one or more of polyolefins, vinyl resins, polyamides and acrylic resins, e.g. polyethylene, polypropylene, polystyrene, polyvinyl chloride, polyvinyl acetate, nylon or polymethyl methacrylate.

The compression step is suitably carried out at a pressure between 10 and 1000 lbs/square inch (between 69 and 6,900 kPa), and the residence time for the compression step is preferably between 10 seconds and 1 or 2 minutes. The residence time for the heating of the mat is preferably between 2 and 20 minutes and the mat of raw material is of course heated to at least the softening point of the highest melting thermoplastics constituent. The actual conditions will, however, vary with the nature of the raw material used.

The finished mat preferably has a thickness in the range of 3 to 25 mm, and may be suitably produced in thicknesses of 6, 9, 12 and 15 mm.

The invention will be further described, by way of example only, with reference to the accompanying drawing, which is a schematic side view illustrating apparatus for carrying out the method according to the invention.

Referring to the drawing, a continuous conveyor belt 1 made of resin bound glass fibre material coated with polytetrafluoroethylene is driven around rollers 2 and 3 in the direction indicated by the arrow, the upper run of the belt passing through an oven 4. Upstream of the oven 4 is a hopper 5 from which particulate or granulated raw material containing at least 50% by weight, preferably about or above 85% by weight, reclaimed synthetic thermoplastics material is deposited on the upper run of the belt 1. Reference numeral 6 indicates a roll of polyethylene which is fed in the direction indicated by the arrow around the roller 3 onto the conveyor belt 1 at a point upstream of the hopper 5.

A second continuous conveyor belt 7 is drawn around rollers 8, 9 and 10 and in contact with the roller 2 in the direction indicated by the arrows. Reference numeral 11 indicates a further roll of polyethylene which is fed in the direction indicated by the arrow around the roller 10.

The rollers 2 and 8 may be internally cooled and/or a mist of coolant may be sprayed onto the mat emerging from between the rollers 2 and 8. If the rollers 2 and 8 are internally cooled the coolant may be suitably recirculated through a conventional recirculation plant.

It will be seen that the rollers 10, 2 and 8 are arranged vertically one above the other to define a first passage between the rollers 10 and 2 and a second passage between the rollers 2 and 8. The diameters of the rollers 10, 2 and 8 are in the approximate ratio 1:3:2.

In use, a polyethylene sheet is fed from the roll 6 onto the conveyor belt 1 and particulate or granulated raw material is fed from the hopper 5 onto the polyethylene sheet and is smoothed to form a layer about 30 mm thick. On passing through the oven 4 the mat of material on the polyethylene sheet is heated to the softening point of the highest melting thermoplastics constituent of the material, whereupon the thermoplastics material in the mat is caused to melt and flow between and bind the pieces of other material in the mat.

On emerging from the oven 4 the mat of material, which is now about 15 mm thick, is passed into the passage between the rollers 10 and 2, and around the roller 2 into the passage between the rollers 2 and 8. The mat is compressed while passing around the roller 2, between the rollers 10 and 8, the main compression taking place just after the mat emerges from the passage between the rollers 10 and 2. The mat emerging from the passage between the rollers 2 and 8 is thus compressed to a thickness of for example about 12 mm. It is, however, envisaged that the apparatus may be utilized to produce material of various thicknesses, preferably in the range from 3 to 25 mm. Simultaneously a further polyethylene sheet is fed from the roll 11 into the passage between the rollers 10 and 2 and is bonded by compression onto that side of the mat opposite the side to which a polyethylene sheet originating from the roll 6 has already been applied. The mat then passes around the roller 8 and continues as shown in the direction away from the oven 4 for cutting into sheets and possible further treatment.

More than one film of polyethylene may be applied at one or both ends of the conveyor from separate rolls. For example, there may be two rolls 11 each feeding a polyethylene sheet into the passage between the rollers 10 and 2, one of these sheets of polyethylene extending over the full width of the mat and the other polyethylene sheet being a relatively narrow strip which may for example carry some distinctive marking.

The upper roller 10 might possibly be heated to assist bonding of the polyethylene sheet(s) to the mat.

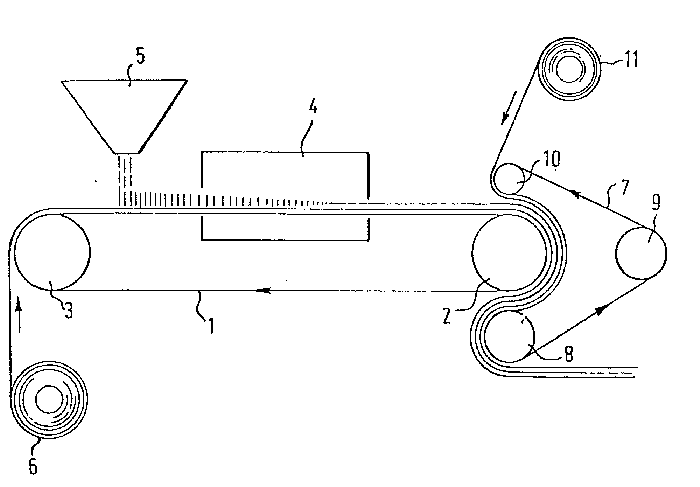

In Figure 1, the roller 10 has a diameter of about 1 ft (30.5 cm), the roller 2 has a diameter of about 3 ft (91.5 cm) and the roller 8 has a diameter of about 2 ft (61 cm). However, the sizes of the rollers 2 and 8 could be reversed or the rollers 2 and 8 could both have a diameter of about 2 ft 6 ins (76 cm).

The method is preferably operated continuously.

The product obtained by the method according to the invention may for example find use in agricultural applications, because it is pliable, and is not attacked by animals, or may find use as a cable covering, but many other uses are envisaged.

**Claims**

1. A method of manufacturing a plastics articles from a raw material containing at least 50% by weight reclaimed synthetic thermoplastics material by providing a mat of the raw material in particulate or granulated form on a conveyor belt (1), heating the mat of material by conveying the mat through an oven (4) on the conveyor belt to cause the thermoplastics material in the mat to soften, and compressing the softened mat downstream of the oven for which compression two rollers (2, 8) are provided arranged one above the other, one of the rollers supporting the conveyor belt, whereby the softened thermoplastics material binds the pieces of other material in the mat, the mat being cooled during compression, characterized in that the mat is compressed between the said conveyor belt (1) and a further belt (7) passing around said two rollers (2, 8) and an additional roller (10) arranged generally one above the other to define a first passage between the upper and middle rollers (10, 2) and a second passage between the middle and lower rollers (2, 8), the said middle roller (2) also supporting the conveyor belt, the mat passing from the oven through the said first passage, around the middle roller (2) to the said second passage, and then around the lower roller (8) to continue in the direction away from the oven, the middle and lower rollers (2, 8) being of substantially greater diameter than the upper roller (10) and being of sufficient diameter to mitigate cracking of the mat as it passes around the said rollers, and in that the mat is cooled as it passes around at least the said middle roller (2).

2. A method as claimed in Claim 1, characterized in that the said middle roller (2) is of greater diameter than the said lower roller (8).

3. A method as claimed in Claim 1 or 2, characterized in that both said middle (2) and lower (8) rollers have a diameter at least twice that of the said upper roller (10).

4. A method as claimed in any of Claims 1 to 3, characterized in that the ratio of the diameters of the said upper (10), middle (2) and lower (8) rollers is substantially 1:3:2 respectively.

5. A method as claimed in any of Claims 1 to 4, characterized by cooling the mat as it passes around at least the said middle (2) and lower (8) rollers.

6. Apparatus for manufacturing a plastics articles from raw material containing at least 50% by weight reclaimed synthetic thermoplastics material, comprising a conveyor belt (1), means (5) for feeding a mat of the raw material in particulate or granulated form onto the conveyor belt at an upstream portion thereof, an oven (4) downstream of the raw material feeding means for heating the mat to cause the thermoplastics material in the mat to soften as the mat is passed through the oven on the conveyor belt, and compression means downstream of the oven for compressing the softened mat, said compression means being composed of two rollers (2, 8) arranged one above the other, one of the rollers supporting the conveyor belt, means being provided for cooling the mat during compression, characterized by a further belt (7) arranged to pass around an arrangement of said two rollers (2, 8) and an additional roller (10) downstream of the oven and to co-operate with the said conveyor belt (1) for compressing the softened mat, the three rollers being arranged generally one above the other to define a first passage between the upper and middle rollers (10, 2) and a second passage between the middle and lower rollers (2, 8), the said middle roller (2) also supporting the conveyor belt, the middle and lower rollers (2, 8) being of substantially greater diameter than the upper roller (10) and being of sufficient diameter to mitigate cracking of the mat as it passes around the said rollers, and by means for cooling the mat of material as it passes around at least the said middle roller (2).

7. Apparatus as claimed in Claim 6, characterized in that the said middle roller (2) is of greater diameter than the said lower roller (8).

8. Apparatus as claimed in Claim 6 or 7, characterized in that both said middle (2) and lower (8) rollers have a diameter at least twice that of the said upper roller (10).

9. Apparatus as claimed in any of Claims 6 to 8, characterized in that the ratio of the diameters of the said upper (10), middle (2) and lower (8) rollers is substantially 1:3:2 respectively.

10. Apparatus as claimed in any of Claims 6 to 9, characterized by means for cooling the mat as it passes around at least the said middle (2) and lower (8) rollers.

## Patentansprüche

1. Verfahren zur Herstellung von Kunststofferzeugnissen aus einem Rohmaterial, das mindestens 50 Gewichtsprozente zurückgewonnenen, thermoplastischen Kunststoffmaterials enthält, durch Bilden einer Matte des Rohmaterials auf einem Förderband (1) in partikel- oder granulierter Form und Erwärmen des thermoplastischen Materials in der Matte bis zum Erweichen, durch Hindurchführen der Materialmatte auf dem Förderband durch einen Ofen (4) und Zusammendrücken der erweichten Matte stromabwärts vom Ofen, für welches Zusammendrücken zwei Walzen (2, 8) übereinander angeordnet sind, von denen eine das Förderband unterstützt, wobei das erweichte thermoplastische Material die Stücke anderen Materials in der Matte bindet und die Matte während des Zusammendrückens gekühlt wird, dadurch gekennzeichnet, daß die Matte zwischen dem erwärmten Förderband (1) und einem weiteren Band (7) zusammengepreßt wird, das um die genannten zwei Walzen (2, 8) und eine zusätzliche Walze (10) herumgeführt ist, die im allgemeinen übereinander angeordnet sind, um einen ersten Durchtritt zwischen der oberen und mittleren Walze (10, 2) und einen zweiten Durchtritt zwischen der mittleren und unteren Walze (2, 8) zu bilden, wobei die genannte mittlere Walze (2) auch das Förderband unterstützt und wobei die Matte aus dem Ofen durch den ersten Durchtritt, um die mittlere Walze (2) zum zweiten Druchtritt und dann um die untere Walze (8) weiter in der Richtung vom Ofen weg verläuft, daß die mittlere und untere Walze (2, 8) von im wesentlichen größerem Durchmesser als die obere Walze (10) sind und ihr Durchmesser ausreicht, die Bildung von Rissen in der um die Walzen geführten Matte zu vermeiden, und daß die Matte gekühlt wird, während sie wenigstens um die mittlere Walze (2) geführt wird.

2. Verfahren nach Anspruch 1, dadurch gekennzeichnet, daß die mittlere Walze (2) einen größeren Durchmesser als die untere Walze (8) aufweist.

3. Verfahren nach Anspruch 1 oder 2, dadurch gekennzeichnet, daß die mittlere (2) und untere Walze (8) einen Durchmesser von mindestens dem Zweifachen desjenigen der der oberen Walze (10) aufweisen.

4. Verfahren nach einem der Ansprüche 1 bis 5, dadurch gekennzeichnet, daß das Verhältnis der Durchmesser der oberen (10), mittleren (2) und unteren Walze (8) un wesentlichen 1:3:2 beträgt.

5. Verfahren nach einem der Ansprüche 1 bis 4, gekennzeichnet durch das Abkühlen der Matte bei ihrem Verlauf um wenigstens die mittlere (2) und untere Walze (8).

6. Vorrichtung zur Herstellung von Kunststofferzeugnissen aus Rohmaterial mit einem Gehalt von mindestens 50 Gewichtsprozenten zurückgewonnenen, thermoplastischen Kunststoffmaterials mit einem Förderband (1), Mitteln (5) zum Zubringen einer Matte des Rohmaterials in Teilchen- oder Granulatform auf das Förderband an einem Teilstück stromaufwärts desselben, und einem Ofen (4) stromabwärts vom Rohmaterialzubringer zum Erwärmen der Matte, um das thermoplastische Material in der Matte zu erweichen, während diese auf dem Förderband den Ofen passiert, mit stromab des Ofens angeordneten Mitteln zum Zusammendrücken der erweichten Matte, welche aus zwei übereinander angeordneten Walzen (2, 8) bestehen, deren eine das Förderband abstützt, und mit Mitteln zur Kühlung der Matte während des Zusammendrückens, gekennzeichnet durch einen zusätzlichen Gurt (7), der um eine Anordnung der erwähnten zwei Walzen (2, 8) und eine zusätzliche Walze (10) geführt ist, stromab vom Ofen und um zusammen mit dem genannten Förderband (1) die erweichte Matte zusammenzudrücken, wobei die drei Walzen im allgemeinen übereinander angeordnet sind, um einen ersten Durchtritt zwischen der oberen und mittleren Walze (10, 2) und einen zweiten Durchtritt zwischen der mittleren und unteren Walze (2, 9) zu bilden und die mittlere Walze (2) auch das Förderband stützt, daß die mittlere und untere Walze (2, 8) von im wesentlichen größerem Durchmesser als die obere Walze (10) sind und von hinreichend großem Durchmesser um Rißbildungen in der Matte zu vermeiden, während diese wenigstens um die mittlere Walze (2) herumgeführt wird.

7. Vorrichtung nach Anspruch 6, dadurch gekennzeichnet, daß die mittlere Walze (2) von größerem Durchmesser ist als die untere Walze (8).

8. Vorrichtung nach Anspruch 6 oder 7, dadurch gekennzeichnet, daß die mittlere (2) und untere Walze (8) einen Durchmesser von mindestens dem Zweifachen derjenigen der oberen Walzen (10) aufweisen.

9. Vorrichtung nach einem der Ansprüche 6 bis 8, dadurch gekennzeichnet, daß das Verhältnis der Durchmesser der oberen (10), mittleren (2) und unteren Walze (8) im wesentlichen jeweils 1:3:2 beträgt.

10. Vorrichtung nach einem der Ansprüche 6 bis 9, gekennzeichnet durch Mittel zum Abkühlen der Matte bei ihrem Verlauf um mindestens die mittlere (2) und untere Walze (8).

**Revendications**

1. Procédé pour fabriquer des produits en matière plastique à partir des matières premières contenant au moins 50% en poids de matière thermoplastique synthétique de récupération en formant un mat de la matière première sous forme de particules ou de granulés sur une bande transporteuse (1), en chauffant le mat de matière en le transportant à travers un four (4) sur la bande transporteuse pour ramollir la matière thermoplastique dans le mat, et en comprimant le mat ramolli en aval du four, deux rouleaux (2, 8) étant prévus pour cette compression en étant disposés l'un au-dessus de l'autre, l'un des rouleaux supportant la bande transporteuse, grâce à quoi la matière thermoplastique ramollie lie les morceaux d'autres matières dans le mat, le mat étant refroidi lors de la compression, caractérisé en ce que le mat est comprimé entre la bande transporteuse (1) et un autre bande (7) passant autour des deux rouleaux (2, 8) et d'un rouleau additionnel (10) disposés généralement l'un au-dessus de l'autre pour définir un premier passage entre le rouleau supérieur et le rouleau médian (10, 2), et un deuxième passage entre le rouleau médian et le rouleau inférieur (2, 8), le rouleau médian (2) supportant également la bande transporteuse, le mat passant du four à travers le premier passage, autour du rouleau médian (2) pour aller au deuxième passage, et ensuite autour du rouleau inférieur (8) pour continuer dans une direction opposée au four, les rouleaux médian et inférieur (2, 8) ayant un diamètre sensiblement supérieur au rouleau supérieur (10) et ayant un diamètre suffisant pour atténuer la fissuration du mat lorsqu'il passe autour des rouleaux, et en ce que le mat est refroidi lorsqu'il passage autour d'au moins le rouleau médian (2).

2. Procédé selon la revendication 1, caractérisé en ce que le rouleau médian (2) a un diamètre supérieur au rouleau inférieur (8).

3. Procédé selon la revendication 1 ou la revendication 2, caractérisé en ce que le rouleau médian (2) et le rouleau inférieur (8) ont tous deux un diamètre au moins double du diamètre du rouleau supérieur (10).

4. Procédé selon l'une des revendications 1 à 3, caractérisé en ce que le rapport des diamètres du rouleau supérieur (10), du rouleau médian (2) et du rouleau inférieur (8) est pratiquement 1:3:2.

5. Procédé selon l'une quelconque des revendications 1 à 4, caractérisé en ce que le mat est refroidi lorsqu'il passe autour d'au moins le rouleau médian (2) et le rouleau inférieur (8).

6. Dispositif pour fabriquer des produits en matière plastique à partir de matière première contenant au moins 50% en poids de matière thermoplastique synthétique de récupération, comportant une bande transporteuse (1), des moyens (5) pour amener un mat de la matière première en particules ou en granulés sur la bande transporteuse dans une portion amont de celle-ci, un four (4) disposé en aval des moyens d'amenée de la matière première pour chauffer le mat et ramollir la matière thermoplastique dans le mat lorsqu'il passe à travers le four sur la bande transporteuse, et des moyens de compression disposés en aval du four pour comprimer le mat ramolli, ces moyens de compression comportant deux rouleaux (2, 8) disposés l'un au-dessus de l'autre, l'une des rouleaux supportant la bande transporteuse, des moyens pour refroidir le mat pendant la compression, caractérisé en ce qu'une autre bande (7) est disposée pour passer autour d'un jeu des deux rouleaux (2, 8) et d'un rouleau additionnel (10) en aval du four et pour coopérer avec la bande transporteuse (1) pour comprimer le mat ramolli, les trois rouleaux étant disposés généralement l'un au-dessus de l'autre pour définir un premier passage entre le rouleau supérieur (10) et le rouleau médian (2) et un deuxième passage entre le rouleau médian (2) et le rouleau inférieur (8), le rouleau médian (2) supportant également la bande transporteuse, les rouleaux médian et inférieur (2, 8) ayant un diamètre sensiblement supérieur au rouleau supérieur (10) et ayant un diamètre suffisant pour atténuer la fissuration du mat lorsqu'il passe autour desdits rouleaux, et en ce que des moyens sont prévus pour refroidir le mat de matière lorsqu'il passe autour d'au moins le rouleau médian (2).

7. Dispositif selon la revendication 6, caractérisé en ce que le rouleau médian (2) a un diamètre supérieur au rouleau inférieur (8).

8. Dispositif selon la revendication 6 ou la revendication 7, caractérisé en ce que le rouleau médian (2) et le rouleau inférieur (8) ont tous deux un diamètre égal au moins au double du diamètre du rouleau supérieur (10).

9. Dispositif selon l'une quelconque des revendications 6 à 8, caractérisé en ce que le rapport des diamètres du rouleau supérieur (10), du rouleau médian (2) et du rouleau inférieur (8) est pratiquement 1:3:2.

10. Dispositif selon l'une quelconque des revendications 6 à 9, caractérisé en ce qu'il est prévu des moyens pour refroidir le mat lorsqu'il passe autour d'au moins le rouleau médian (2) et le rouleau inférieur (8).